# EUROPEAN PATENT APPLICATION

(11) **EP 4 792 998 A1**
(43) Date of publication of application: **19.08.2026**
(21) Application number: 25382123.5
(22) Date of filing: 12.02.2025
(51) Int. Cl.: B25J 9/16, B25J 9/10

(54) **ROBOT AND METHOD OF OPERATING ONE OR MORE JOINTS THEREOF**

(71) Applicant: Danobat S. Coop., 20870 Elgoibar Guipuzcoa (ES)
(72) Inventor: VOGEL, Denis, 5000 Aarau, AARGAU (CH); NARBAIZA, Iñaki, 20870 Elgoibar, GIPUZKOA (ES); BARRIOS, Asier, 20870 Elgoibar, GIPUZKOA (ES); FRANCO, Oier, 20870 Elgoibar, GIPUZKOA (ES)
(74) Representative: Balder IP Law, S.L.

(57) **Abstract**

A robot comprises a robot arm comprising a plurality of links (11, 12, 13, 14, 15, 16) and joints, at least one link (11, 12, 13) being rotatable around an axis (A1, A2, A3) at a joint (1, 2, 3) that comprises a driven gear (300) and a first motor unit (100) with a first pinion (101) that is engaged with the driven gear (300) to apply a first torque (T1) to the driven gear (300) to cause rotation of the corresponding link (11, 12, 13). The joint (1, 2, 3) further comprises a second motor unit (200) with a second pinion (201) also engaged with the driven gear (300). The second motor unit (200) is adapted to apply a second torque (T2) to the driven gear (300), the second torque being opposed to the first torque (T1). Also disclosed is a method of operating at least one robot joint.

## Description

### TECHNICAL FIELD

The present invention relates to robots, such as multi-axis robots, and to methods for operating them.

### STATE OF THE ART

Industrial robots, for example, robots for pick-and-place operation, welding, cutting, etc., typically comprise a plurality of members or links interconnected by joints, such as by rotary joints (also known as revolute joints). A rotary joint typically allows one link to be rotated around an axis in relation to another link or in relation to a base of the robot. In many industrial robots, links are motor driven, whereby a motor unit comprises a motor driving a pinion that meshes with a driven gear connected to the link to be rotated (such as pivotated), so that the link is rotated (such as pivotated) around the axis of the driven gear.

Thus, a link extending from the base of the robot can be rotated in relation to the base, and a link connected to another link forming part of an arm of the robot can be rotated in relation to the other link. Robot arms with multiple links allow for movement of a tool at the end of the robot arm with multiple degrees of freedom.

Sophisticated gear arrangement have been developed to provide for reliable and controlled displacement of the links, including rotation of links at the joints, using motors, such as electrical motors. Typically, a motor unit comprises the motor as such and a gearbox, and a pinion connected to an output shaft of the gearbox interacts with a moveable or stationary driven gear to cause rotation of the corresponding link.

Although gear arrangements or standard robotic gearboxes i.e. strain wave gears, cycloidaln gears, planetary gears nowadays often allow for high precision movement, robot arms often have a substantial length, wherefor even a relatively small lack of precision of movement at a joint can cause a relatively substantial position error at the end of the robot arm, that is, at the position of the tool held by the robot arm, such as a pick-and-place tool, a welding tool, etc. It has been found that even with relatively sophisticated gear arrangements, there may be a certain play between the pinion of the motor unit and the driven gear, for example, manufacturing inaccuracies (tolerances) and/or wear of the components. This may cause a risk of imprecisions due to so-called reversal effects (backlash), oscillations and imprecisions in the movement of the link and, therebv, in the precision of movement of the robot arm as such and of the tool. Backlash and oscillations may also cause a highly unstable and non-linear controller behavior. An error (lack of precision) upstream in the series of links can cause a major error downstream, in particular, at the end of the robot arm. Thus, it has been found desirable to further improve the precision in robot arms.

### DESCRIPTION OF THE INVENTION

A first aspect of the invention relates to a robot comprising a robot arm comprising a plurality of links and joints, at least one link being rotatable around an axis at a joint joining the link in question to a base or to another link. The joint comprises a driven gear, a first motor unit with a first pinion, the first pinion being engaged with the driven gear so as to apply a first torque to the driven gear to cause rotation of the corresponding link. The joint further comprises a second motor unit with a second pinion, the second pinion being engaged with the driven gear, the second motor unit being adapted to apply a second torque to the driven gear, the second torque being opposed to the first torque so as to avoid or reduce back-lash by applying a pre-tension to the link, ensuring stable contact between the first pinion and the driven gear during operation of the first motor unit. The pre-tension applies a controlled force to the mechanical linkage (here, the driven gear) to ensure constant contact between the two pinions and the driven gear, thereby preventing the kind of mechanical gaps that are typically for common gearboxes (such as cycloidal, strain-wave, planetary, worm and bevel gears) in robotics. The second torque is smaller than the first torque. In some embodiments, the second torque is set to be in the range of 2-20% of the nominal torque of the motor of the second motor unit. This kind of joint, which can be referred to as a reduced back-lash joint, can be present between a base and a link of the robot, and/or between two links.

The SIEMENS Function Manual SINUMERIK, SINUMERIK ONE Technologies, valid for control system SINUMERIK ONE, CNC software version 6.15, of 07/2021, refers, apparently in the context of linear CNC drives such as linear rack-pinion, in its section 5.1 to a master-slave arrangement with two motors, one possible application of which is said to be compensating gear and gear tooth flank play by entering a pre-tensioning torque. The method disclosed in that document is reactive: the slave motor follows the master motor and adjusts its torque after detecting positional errors.

In some embodiments of the present invention, all of the joints of the robot arm may be as described, in other embodiments, only one or some of the joints are as described. For example, in some embodiments, only the first one, two or three joints, counted from the base, are reduced back-lash joints as described above.

In some embodiments, the robot arm comprises a plurality of serially arranged links, each link being rotatable around an axis at a joint, the number of joints being M, M≥5, such as six, wherein only N of the joints comprises a first motor unit, a second motor unit and a driven gear as defined in claim 1, N≤4, for example, N=1, 2 or 3. For example, the first N joints may be reduced back-lash joints, that is, two-motor joints as described above, whereas the rest of the joints may be conventional joints, typically comprising only one motor unit. The reduced back-lash joints are typically more complex than the conventional joints, for example, due to the presence of the second motor unit, and the need for co-ordination of the two motor units, and the benefits of the reduced back-lash in terms of precision of the free end of the robot arms is typically higher when the reduced back-lash is achieved close to the base, that is, in one or more of the first joints of the robot arm counted from the base. Typically, joints closer to the base benefit more from backlash reduction due to the cumulative effects on end-effector precision.

In some embodiments, the first motor unit is position controlled and the second motor unit is torque controlled.

In some embodiments, the robot further comprising a control system, the control system being adapted, that is, configured, to control movement of the robot arm, wherein the control system is adapted, that is, configured, to control the first motor unit by position control and to control the second motor unit by torque control. That is, rather than using a master-slave coupling between two motors as discussed in the SINUERIK document mentioned above, the first motor unit (in particular, the motor of the first motor unit) operates in position control mode whereas the second motor unit (in particular, the motor of the second motor unit) operates in torque control mode. This provides, for example, for efficiency, as the first motor unit can be position controlled in a manner that can precisely and quickly rotate the corresponding link to a desired position, whereas the second motor unit can be independently controlled to adjust its torque to maintain the required pre-tension during operation. Instead of passively acting as a "slave motor" following a "master motor", the second motor unit can have its torque actively adjusted in real time based on system feedback, such as motor current measurements or direct sensors, such as direct torque sensor, inertial measurement unit IMU and the calculation of the torque using a motor encoder and direct feedback. This dynamic torque adaption enhances efficiency and ensures adequate pre-tension is maintained during operation, preventing backlash. In particular, the torque of the second motor unit can be adapted not to excessively oppose the torque of the first motor unit, but just to provide a level of torque necessary to ensure that a desired level of pre-tension is maintained, so as to prevent backlash effects. The second torque is smaller than the first torque, ensuring smooth motion while effectively eliminating backlash.

In some embodiments, the robot is adapted for subtractive manufacturing or additive manufacturing of workpieces, for example, milling, drilling, laser-cutting, and/or 3D-printing. The enhanced precision provided by the invention have been found to be especially advantageous in the context of robots for machining that require a high degree of precision, such as robots for machining by milling, drilling, etc.

In some embodiments, the robot further comprises a torque motor coupled to the driven gear, for example, to the output shaft of the driven gear. Thereby, the torque motor can be used to provide for, for example, active damping and/or torque contribution. An encoder can be present at a shaft of the driven gear and provide output that can be used for position control and/or for control of the torque motor.

Another aspect of the invention relates to a method of operating at least one joint with two motor units in a robot as defined in any one of the preceding claims, the method comprising the steps of:
controlling the first motor unit of a joint so as to rotate the corresponding link to a specified position, whereby the first motor unit applies a first torque to the driven gear of the joint via the first pinion; and
controlling the second motor unit of the joint to apply a second torque to the driven gear via the second pinion, the second torque being opposed to the first torque so as to establish pre-tension in order to avoid, reduce or minimize back-lash effects.

In some embodiments, the first motor unit is controlled by position control, and the second motor unit is controlled by torque control. That is, basically, the two motor units can be controlled independently to optimize both positioning accuracy and dynamic torque adaptation. One operates in position control mode to favour prompt and precise rotation of the corresponding link to the desired angular position in relation to the preceding stage of the robot, that is, the base or a preceding link, while at the same time the second motor unit operates in torque control mode to actively regulate pre-tension and maintain it at the desired level or within the desired band. The torque control allows continuous and real-time adaptation to varying external loads, typical and critical for robot arms and even more in multi-joint robot arms used for machining, where external process forces occur and load conditions can fluctuate dynamically during movement.

In some embodiments, the step of controlling the second motor unit by torque control comprises dynamically adjusting the second torque applied to the driven gear by the second motor unit based on real-time motor current measurement, whereby the motor current serves as an indirect estimation of the torque applied by the second motor unit, which is often a cost-effective option.

In some embodiments, the step of controlling the second motor unit by torque control comprises dynamically adjusting the second torque applied to the driven gear by the second motor unit based on real-time torque estimation, wherein the estimated torque is preferably derived from one or more of the following sources:
- a torque sensor that directly detects the applied torque and provides closed-loop feedback;
- a computational method utilizing real-time measurements from a motor encoder (e.g. optical, magnetical, inductive, capacitive encoder with sub-micron precision, multi-turn capability and high-resolution output) and an output encoder (e.g. optical, magnetical, inductive, capacitive encoder with sub-micron precision, single or multi-turn capability and high-resolution output) to determine torque based on relative displacement, stiffness characteristics, and system dynamics;
- an inertial measurement unit (IMU) that estimates applied torque based on angular acceleration, mass distribution, and moment of inertia of the driven gear and connected components;
- an output encoder that provides direct position feedback for refining motion control and torque estimation.

In some embodiments, the step of controlling the second motor unit by torque control comprises estimating torque by combining motor current, encoder feedback (e.g. optical, magnetical, inductive, capacitive encoder with sub-micron precision, single or multi-turn capability and high-resolution output), and IMU data to improve torque control and position accuracy in real time.

In some embodiments, the position of the robotic joint is determined based on an output encoder mounted on the driven gear, such as on a shaft on which the driven gear is mounted. Such an encoder may provide real-time absolute or relative position feedback independent of motor shaft encoders, compensating for mechanical compliance and enhancing position accuracy during operation.

In some embodiments, after rotating a link to a specified position by rotating it in a first direction using the first motor unit for driving the link while using the second motor unit to apply an opposed torque for pre-tensioning, the link is rotated in a second direction opposite to the first direction by driving the link with the second motor unit while using the first motor unit to apply an opposed torque for pre-tensioning. That is, the first and second motor units switch roles based on the direction of movement, so that when the robotic joint reverses, the driving motor switches to pre-tensioning mode, and the other motor takes over the driving function, ensuring continuous backlash-free operation.

In some embodiments, the method performed for the purpose of carrying out machining operations with the robot, such as operations comprising milling and/or drilling of a workpiece with a tool manipulated with the robot.

What has been described above is focused on the operation of an individual joint, but preferably more than one robot joint is operated in this manner, simultaneously or sequentially, such as two, three, four or more joints of a serial link robot arm or other kind of robot link arrangement.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 is a schematic perspective view of a robot in accordance with an embodiment of the invention.
Figure 2 is a schematic perspective view of part of the robot in accordance with the embodiment of figure 1.
Figure 3 schematically illustrates the relationship between the pinions and driven gear involved with a joint in the embodiment of figure 2.
Figure 4 schematically illustrates the rotary arrangement of the first link in relation to the base of the robot arm, in an embodiment of the invention.
Figure 5 schematically illustrates the rotary arrangement of the second and third links in relation to respective previous link of the robot arm, in an embodiment of the invention.
Figure 6 is a block diagram illustrating the structure of part of the control system in accordance with an embodiment of the invention.
Figure 7 schematically illustrates the torque relationship between the pinions when driving a joint/link in the opposite direction after having driven it as shown in figure 3.
Figures 8 and 9 are schematic diagrams illustrating some components of drive arrangements in accordance with different embodiments of the invention.

### DESCRIPTION OF WAYS OF CARRYING OUT THE INVENTION

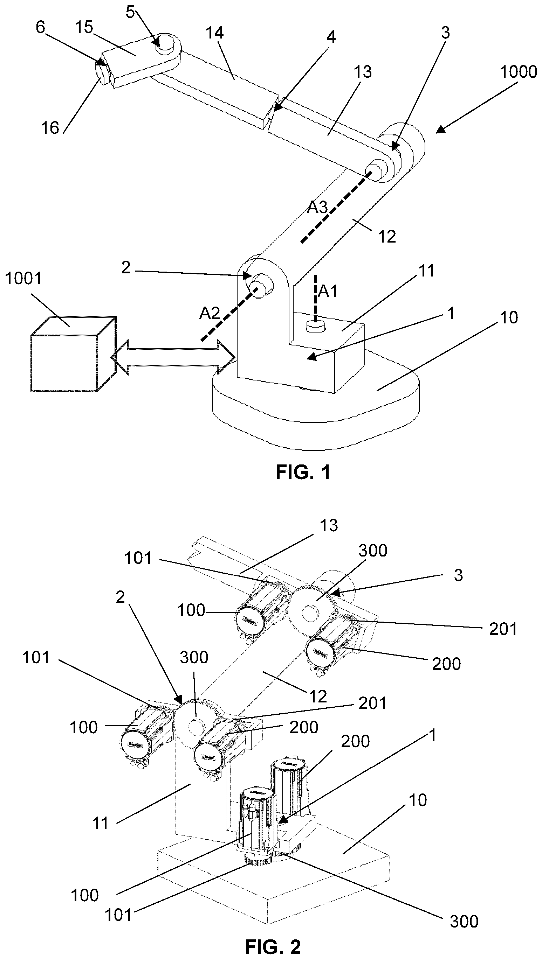

Figure 1 shows a robot 1000 in accordance with an embodiment of the invention, comprising a base 10 and a plurality of serially arranged links 11, 12, 13, 14, 15, 16, the first link 11 being coupled to the base via a rotational joint 1 (the reference numbers of the joints merely schematically illustrate the positions of the joints), and the subsequent links all being connected to a preceding link via a respective rotational joint 2, 3, 4, 5 and 6. Each rotational joint is arranged for allowing a corresponding link to pivot or rotate around an axis. For example, in the robot illustrated in figure 1, the first link 11 is arranged to rotate around a vertical axis A1 in relation to the base 10 (the capacity of rotation may be of less than 360 degrees, but also of 360 degrees, or more), the second link 12 is arranged to rotate around a horizontal axis A2 in relation to the first link 11 (typically, the capacity of rotation may be in the order of 200 degrees), the third link 13 is arranged to rotate around a horizontal axis A3 in relation to the second link 12 (typically, the capacity of rotation may be in the order of 200 degrees), etc. A control system 1001 for controlling movement of the rotor arm (and optionally also other aspects) is also schematically illustrated. Although it is illustrated schematically illustrated as an external unit (external to the robot arm), it may be present within the robot arm, or distributed between within and outside the rotor arm. Thus, the illustration is merely schematic.

In different variants of this embodiment, one, two, three or more of the joints are reduced back-lash joints with two motor units for applying pre-tension to mitigate unwanted play in the mechanism, as described above. For example, the first three joints 1, 2 and 3 may be reduced back-lash joints, whereas the rest of the joints may be conventional joints. The reduced back-lash joints are typically more complex than the conventional joints (for example, due to the presence of the second motor unit, and the need for co-ordination of the two motor units), and the benefits of the reduced back-lash in terms of precision of the free end of the robot arms is typically higher when the reduced back-last is achieved close to the base, that is, in one or more of the first joints of the robot arm counted from the base. Typically, joints closer to the base benefit more from backlash reduction due to the cumulative effects on end-effector precision.

Figure 2 schematically illustrates part of the embodiment of figure 1 and, in particular, part of the structure of the first three joints 1, 2 and 3. As can be seen, each joint comprises a first motor unit 100 with first pinion 101 and a second motor unit 200 with a second pinion 201. The pinions may be directly connected to the shaft of the respective motor, or connected to the shaft of the motor through some kind of gear box. Additionally, each joint comprises a driven gear 300. The driven gear 300 meshes with the pinions 101, 201 of the motor units 100, 200 so that the motor units when operated apply respective torques onto the driven gear, thereby producing a rotation of one of the links 11, 12, 13 around an axis defined by the respective joint. The term "driven gear" should not be interpreted in the sense that the driven gear actually rotates: it may be a fixed gear, so that when torque is applied from the motor units, the motor units are caused to rotate around the driven gear. That is, in certain configurations, the driven gear remains fixed, causing the motor units themselves to rotate around it. This is, for example, the case in the arrangement of figure 2, where in the first joint 1, the driven gear 300 is fixed to the base 10, and the motor units 100, 200 are fixed to the first link 11 of the robot arm, so that they rotate with the first link 11 when the joints is actuated to rotate the first link 11 around the vertical axis A1 (schematically illustrated in figure 1). If figure 2, the same reference numbers are used for the motor units at the different joints, though actual configurations may differ to meet torque demands at specific locations. Torque requirements generally increase in joints closer to the base, as they bear the accumulated weight of subsequent links. Thus, different joints may indeed have different kinds of motor units, pinions and gears, depending on, for example, the desired torque capacities at the respective joints.

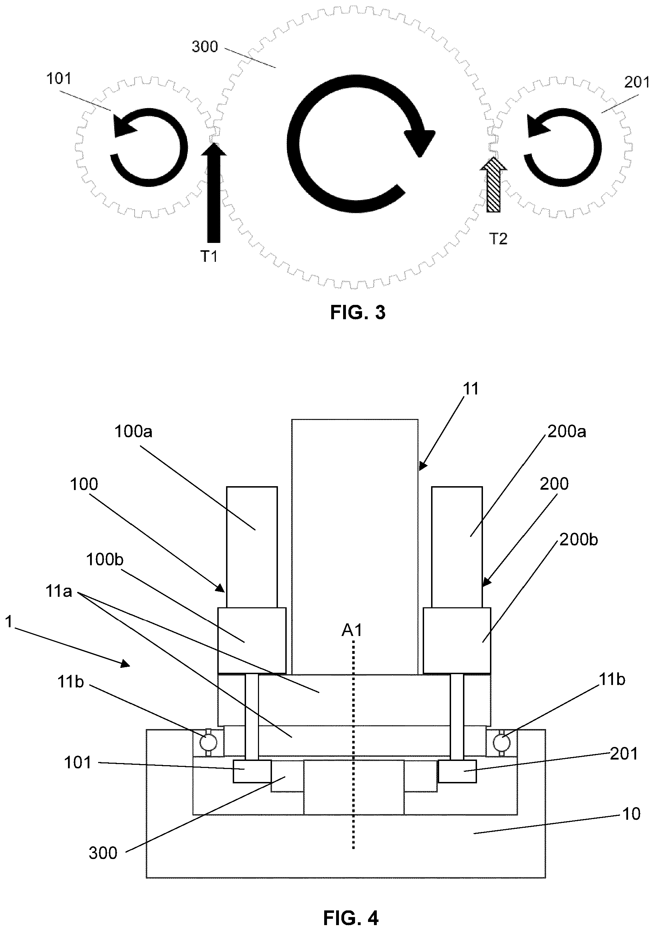

Figure 3 schematically illustrate the operation of the pinions and the driven gear in a joint as per the embodiment illustrated in figure 2. Here, the driven gear 300 receives a first torque T1 from the first pinion 101 (that is, the pinion of the first motor unit 100) that "drives" the driven gear 300 in the clock-wise direction (or, which if the driven gear 300 is fixed, will cause the first motor unit to rotate around it in the counter-clockwise direction). Meanwhile, the second pinion 201 (that is, the pinion of the second motor unit) applies a second torque T2 onto the driven gear, the second torque being opposed to the first torque and smaller than the first torque. Thus, the direction of rotation of the first pinion 101 and the second pinion 201 will be the same, but the second pinion will, due to the second torque, create a so-called pre-tension in the joint, ensuring constant contact between the two pinions 101, 201 and the driven gear 300, thereby increasing precision and dynamic stiffness in the movement of the respective link, prevention of back-lash and reduction or prevention of undesired oscillations

Figure 4 schematically illustrates how the first link 11 of the robot arm, such as of the robot arm of figures 1 and 2, is rotatably arranged in relation to the base 10 of the robot, at the first joint 1 of the robot arm. As shown in figure 4, the first link 11 comprises a lower portion 11a that is rotatably attached to the base 10 via bearings 11b, arranged to allow the first link to rotate around an axis A1, in relation to the base 10, which may be fixed to a floor or to any other kind of support. The lower portion 11a is wider than the upper portion of the first link 11, and supports the first motor unit 100 (which comprises the corresponding motor 100a as such and an associated gearbox 100b, the output shaft of which supports the first pinion 101) and the second motor unit 200 (which comprises the corresponding motor 200a as such and an associated gearbox 200b, the output shaft of which supports the second pinion 201). The driven gear 300 is fixed to the base. Thus, as readily understood from figure 4, operation of the motor units as described above will cause the first link 11 to rotate around the first axis A1, due to the first pinion 101 interacting with the fixed driven gear 300, while the second pinion 201 provides for an opposed torque to maintain pre-tension in the drive mechanism.

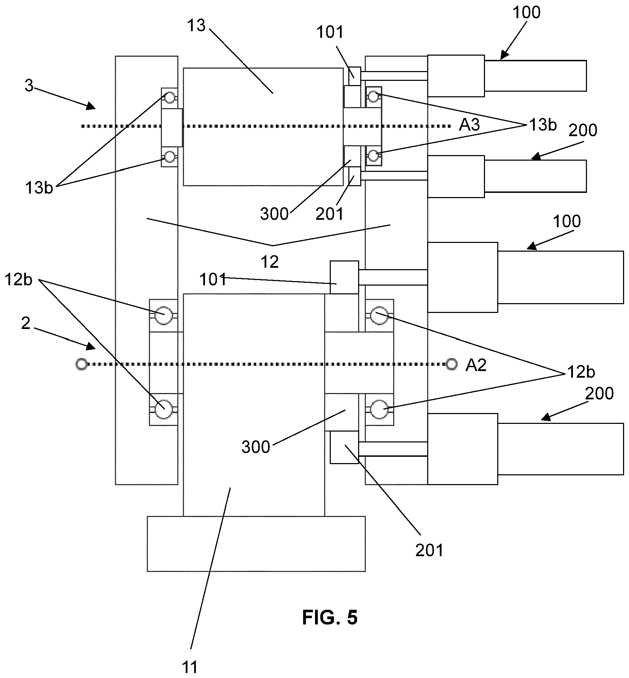

Figure 5 schematically illustrates the rotary arrangement of the second link 12 and the third link 13 of the robot arm, in relation to the preceding link 11 and 12, respectively, at the second joint 2 and the third joint 3, respectively, whereby the second link 12 is rotatably arranged so that it can rotate around the second axis A2, and the third link is rotatably arranged so that it can rotate around the third axis A3. As schematically illustrated, the second link 12 is rotatably arranged on a set of bearings 12b so that it can rotate in relation to the first link 11, and the third link 13 is rotatably arranged on a set of bearings 13b so that it can rotate in relation to the second link 12.

As schematically illustrated, and similarly to what is the case with the first link 11, also the second link 12 supports a first motor unit 100 and a second motor unit 200 with their respective first pinion 101 and second pinion 201, and these pinions interact with the respective driven gear 300 attached to the first link, so that operation of the motors (as per the principles described with reference to figure 3) will cause the motors and the second link 12 to rotate around the second axis A2, in correspondence with the second joint.

The second link 12 also supports, in correspondence with the third joint 3 (that is, the joint between the second link and the third link) a first motor unit 100 and a second motor unit 200, the first pinion 101 and the second pinion 201 of which interact with a driven gear 300 fixed to the third link 13, so that actuation of the motors will cause the driven gear 300 and the third link 13 to rotate around the third axis A3. The motors of the second and third joints are illustrated with different sizes, schematically illustrating that they may be adapted to different load requirements, as the load supported by the second joint may be substantially higher than the load supported by the third joint.

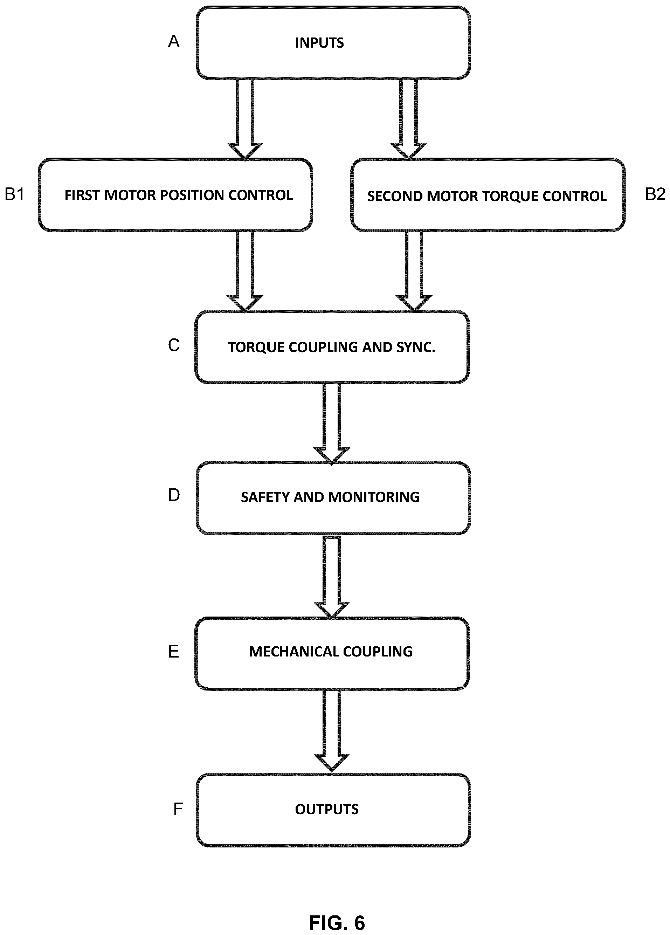

Figure 6 is a block diagram of part of the control system of a robot in accordance with an embodiment of the invention.

Block A relates to the inputs, including, in this embodiment:
- position command for the first motor unit 100;
- torque command for the second motor unit 200;
- encoder feedback (any kind of encoders can be used, for example, optical, magnetical, inductive and/or capacitive encoders) from the first and second motor units;
- motor current feedback from the first and second motor units.

Block B1 relates to the position control loop for the first motor unit 100. Position feedback from an absolute rotary encoder, such as an optical, magnetical, inductive, or capacitive encoder with sub-micron precision, multi-turn capability and high-resolution output. The encoder provides real-time absolute position feedback which is continuously compared with the position command for the first motor unit 100, and a PID position controller processes the difference (error) and generates a torque demand signal. This torque demand is then used to drive the motor unit, ensuring precise position tracking.

Block B2 relates to the torque control loop for the second motor unit 200. A direct measured (or estimated, using motor current feedback) torque is compared with the torque command for the second motor unit 200, and a PID controller processes the error and generates a regulated current signal, which is then passed through a current limiter to prevent excessive loading. This enables adaptive torque balancing, allowing the second motor to dynamically adjust pre-tensioning.

Block C relates to the torque coupling & synchronization logic that monitors the motor commands and ensures adequate torque sharing in real time, to maintain the pre-tension/gear engagement as desired to eliminate backlash. The torque synchronisation logic continuously adjusts how torque is distributed between the primary and secondary motor to ensure smooth operation and efficiency. The system can achieve this by, for example:
- monitoring motor torques in real time using strain gauge-based sensors;
- adjusting torque distribution dynamically based on position and load variations;
- compensating for sudden movements or external forces by modifying pre-tensioning settings as needed. Block D relates to safety and monitoring: torque monitoring, fault detection, and shut-down logic.

Block E relates to the mechanical coupling, that is, the fact that the first motor unit 100 and the second motor unit 200 are mechanically interlinked via the driven gear 300. Thus, the operation of the two motors is conditioned by this mechanical link. The two motors, although operated by two independent PID controllers, are interrelated by the mechanical link and are to be operated to ensure the pre-tension, as explained above. This synchronization prevents backlash and improves torque efficiency.

Block F relates to the outputs generated by the preceding blocks, including: drive signals to the motor units to control movement, position and motion status of the joint allowing for continuous feedback and system adjustments, diagnostics and system logging to monitor performance and detect potential issues.

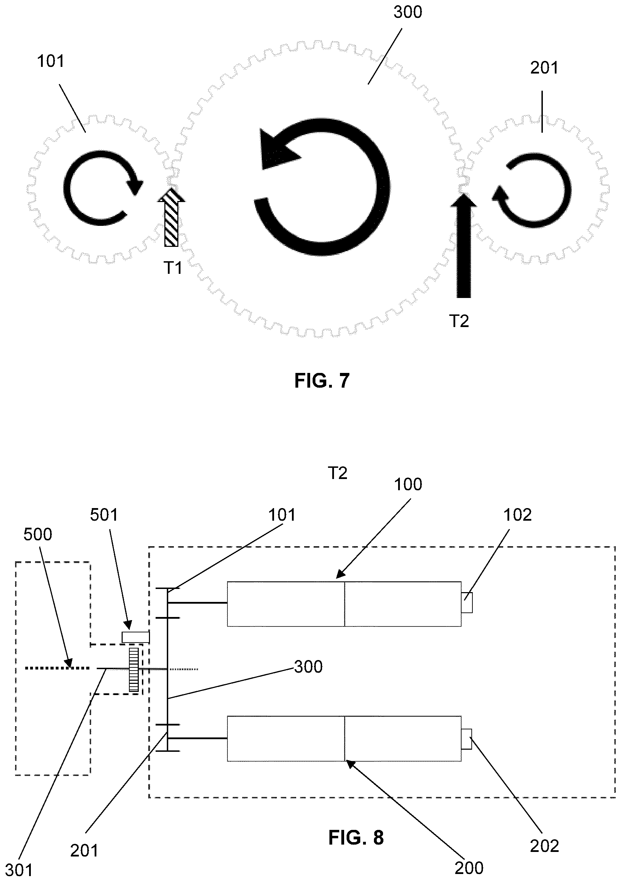

Figure 7 schematically illustrates how the first motor unit 100 and the second motor unit 200 switch their roles to maintain continuous pre-tensioning, after rotating a link to a specified position by rotating it in a first direction using the first motor unit 100 for driving the link while using the second motor unit 200 to apply an opposed torque for pre-tensioning, as schematically shown in figure 3. When thereafter the link is to be rotated in the opposite direction, the link is driven with the second motor unit 200 while using the first motor unit 100 to apply an opposed torque for pre-tensioning. That is, here, the torque applied by the second motor unit 200 is larger than the torque applied by the first motor unit, that is, T2>T1. This can favour a continuous maintenance of the pre-tension and thus favour continuous backlash-free operation and improving motion stability.

Figure 8 schematically illustrate elements forming part of the drive arrangement of a rotary joint in accordance with an embodiment of the invention. The drive arrangement includes the first motor unit 100 (with motor and gearbox, and with an encoder 102 applied on the motor), the second motor unit 200 (with motor and gearbox, and with an encoder 202 applied on the motor). The first pinion 101 and the second pinion 201 engage with the driven gear 300. An output shaft 301 of the driven gear 300 is used to drive a load 500, for example, a link of a robot arm as discussed above. An encoder 501 is applied at the output shaft (it may include a reader and a scale or other element applied to the shaft, so that the reader can detect the rotation of the shaft, as known in the art). This kind of encoder positioned to directly detect the (amount of) rotation of the driven gear can thus be used for enhanced position control.

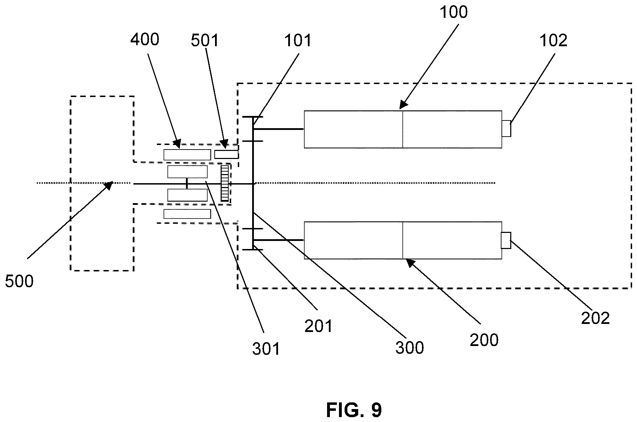

Figure 9 is similar to figure 8, but additionally includes a torque motor 400 consisting of a stator and a rotor arranged on the output shaft of the driven gear 300. Thereby, the torque motor can be used to provide for, for example, active damping and/or torque contribution. The encoder 501 present at the output shaft 301 of the driven gear provides output that can be used for position control and/or for control of the torque motor 400.

Whereas the illustrated embodiments described above (see in particular figures 1 and 2) are focused on serial kinematics (robot arms consisting of a set of serially arranged links and joints), the invention also encompasses robot arms based on parallel kinematics, and mixed serial-parallel kinematics.

When reference is made to rotation (for example, of the driven gear or of the link, the term rotation is to be interpreted broadly, such as to cover pivotation of the link by an amount of substantially less than 360 degrees.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A robot comprising a robot arm comprising a plurality of links (11, 12, 13, 14, 15, 16) and joints, at least one link (11, 12, 13) being rotatable around an axis (A1, A2, A3) at a joint (1, 2, 3) that comprises a driven gear (300) and a first motor unit (100) with a first pinion (101), the first pinion (101) being engaged with the driven gear (300) so as to apply a first torque (T1) to the driven gear (300) to cause rotation of the corresponding link (11, 12, 13),
**characterized in that**
the joint (1, 2, 3) further comprises a second motor unit (200) with a second pinion (201), the second pinion (201) being engaged with the driven gear (300), the second motor unit (200) being adapted to apply a second torque (T2) to the driven gear (300), the second torque being opposed to the first torque (T1).

2. The robot according to claim 1, wherein the robot arm comprises a plurality of serially arranged links (11, 12, 13, 14, 15, 16), each link being rotatable around an axis at a joint (11, 12, 13, 14, 15, 16), the number of joints being M, M≥5, wherein only N of the joints comprises a first motor unit (100), a second motor unit (200) and a driven gear as defined in claim 1, N≤4.

3. The robot according to claim 1 or 2, wherein the first motor unit (100) is position controlled and the second motor unit (200) is torque controlled.

4. The robot according to claim 3, the robot further comprising a control system (1001), the control system (1001) being adapted to control movement of the robot arm, wherein the control system is adapted to control the first motor unit (100) by position control and to control the second motor unit (200) by torque control.

5. The robot according to any one of the preceding claims, adapted for subtractive manufacturing or additive manufacturing of workpieces, for example, milling, drilling, laser-cutting, and/or 3D-printing.

6. The robot according to any one of the preceding claims, further comprising a torque motor (400) coupled to the driven gear (300)

7. A method of operating at least one joint with two motor units in a robot as defined in any one of the preceding claims, the method comprising the steps of:
controlling the first motor unit (100) of a joint, whereby the first motor unit (101) applies a first torque (T1) to the driven gear (300) of the joint via the first pinion (101); and
controlling the second motor unit (200) of the joint to apply a second torque (T2) to the driven gear (300) via the second pinion (102), the second torque (T2) being opposed to the first torque (T2).

8. The method according to claim 7, wherein the first motor unit (100) is controlled by position control, and wherein the second motor unit (200) is controlled by torque control.

9. The method according to claim 8, wherein the step of controlling the second motor unit (200) by torque control comprises dynamically adjusting the second torque (T2) applied to the driven gear (300) by the second motor unit (200) based on real-time motor current measurement.

10. The method according to claim 8, wherein the step of controlling the second motor unit (200) by torque control comprises dynamically adjusting the second torque (T2) applied to the driven gear (300) by the second motor unit (200) based on real-time torque estimation, wherein the estimated torque is preferably derived from one or more of the following sources:
• a torque sensor that directly detects the applied torque and provides closed-loop feedback;
• a computational method utilizing real-time measurements from a motor encoder (e.g. optical, magnetical, inductive, capacitive encoder with sub-micron precision, multi-turn capability and high-resolution output) and an output encoder to determine torque based on relative displacement, stiffness characteristics, and system dynamics;
• an inertial measurement unit (IMU) that estimates applied torque based on angular acceleration, mass distribution, and moment of inertia of the driven gear (300) and connected components;
• an output encoder that provides direct position feedback for refining motion control and torque estimation.

11. The method according to claim 8, wherein the step of controlling the second motor unit (200) by torque control comprises estimating torque by combining motor current, encoder feedback and IMU data to improve torque control and position accuracy in real time.

12. The method according to claim 8, wherein the position of the robotic joint is determined based on an output encoder (501) mounted on the driven gear (300).

13. The method according to any one of claims 7-12, wherein after rotating a link to a specified position by rotating it in a first direction using the first motor unit (100) for driving the link while using the second motor unit (200) to apply an opposed torque for pre-tensioning, the link is rotated in a second direction opposite to the first direction by driving the link with the second motor unit (200) while using the first motor unit (100) to apply an opposed torque for pre-tensioning.

14. The method according to any one of claims 7-13, performed for the purpose of carrying out machining operations with the robot, such as operations comprising milling and/or drilling of a workpiece with a tool manipulated with the robot.
